# EUROPÄISCHE PATENTANMELDUNG

(11) **EP 2 617 280 A1**
(43) Veröffentlichungstag der Anmeldung: **24.07.2013**
(21) Anmeldenummer: 13150760.0
(22) Anmeldetag: 10.01.2013
(51) Int. Cl.: A01D 75/28, A01F 12/10

(54) **Schrägfördererzusammenbau für einen Mähdrescher**

(30) Priorität: 20.01.2012 DE 102012200843
(71) Anmelder: Deere & Company, Moline, IL 61265-8098 (US)
(72) Erfinder: Fuchs, Volker, 54439 Saarburg (DE); Rittershofer, Martin, 67663 Kaiserslautern (DE); Mulder, Jan Ham, 9641 KV, Veendam (NL)
(74) Vertreter: Holst, Sönke

(57) **Zusammenfassung**

Ein Schrägfördererzusammenbau (20) für einen Mähdrescher (10) umfasst ein Gehäuse (62), an dessen rückwärtigen Ende eine obere Schrägfördererwalze (64) drehbar gelagert ist, eine am vorderen Ende des Gehäuses (62) positionierte, untere Schrägfördererwalze (80); ein um die untere Schrägfördererwalze (80) und um die obere Schrägfördererwalze (64) umlaufendes, dehnbares endloses Förderelement (82) mit Mitnehmern (84) und einen am vorderen Ende des Gehäuses (62) um eine Pendelachse (78) schwenkbar angelenkten Pendelschild (72), an dem ein Erntevorsatz (18) befestigbar ist. Die untere Schrägfördererwalze (80) ist am Pendelschild (72) drehbar abgestützt.

## Beschreibung

Die vorliegende Erfindung bezieht sich auf einen Schrägfördererzusammenbau für einen Mähdrescher, mit einem Gehäuse, an dessen rückwärtigen Ende eine obere Schrägfördererwalze drehbar gelagert ist, einer am vorderen Ende des Gehäuses positionierten, unteren Schrägfördererwalze; einem um die untere Schrägfördererwalze und um die obere Schrägfördererwalze umlaufenden, endlosen Förderelement mit Mitnehmern und einem am vorderen Ende des Gehäuses um eine Pendelachse schwenkbar angelenkten Pendelschild, an dem ein Erntevorsatz befestigbar ist.

### Stand der Technik

Selbstfahrende Mähdrescher umfassen ein Fahrgestell, das sich durch vordere, angetriebene Räder (oder Raupenlaufwerke) und rückwärtige, lenkbare Räder auf dem Boden abstützt. An der Vorderseite des Mähdreschers ist ein Schrägfördererzusammenbau angeordnet, an dessen vorderem Ende wiederum ein Erntevorsatz lösbar befestigt ist. Der Erntevorsatz kann beispielsweise als Schneidwerk mit einem Mähwerksbalken und einer darüber angeordneten Haspel und einer dahinter angeordneten Querförderschnecke bzw. einem Querförderband oder als Maispflücker mit Pflückeinheiten und einer Querförderschnecke ausgeführt sein. Beim Erntebetrieb gibt der Erntevorsatz das abgeschnittene oder aufgenommene Erntegut durch eine rückwärtige Abgabeöffnung an den Schrägfördererzusammenbau ab, der es wiederum in das Innere des Mähdreschers fördert, wo es ausgedroschen, getrennt und gereinigt wird.

Der Schrägfördererzusammenbau umfasst ein Gehäuse, in dem üblicherweise ein unterschlächtig arbeitender Kettenförderer um eine untere und eine obere Schrägfördererwalze umläuft, die drehbar am Gehäuse gelagert sind. Die untere Schrägfördererwalze ist rückwärtig der Abgabeöffnung des Erntevorsatzes angeordnet und die obere Schrägfördererwalze übergibt das Erntegut einer (Axial- oder Tangential-) Dreschtrommel oder einer Beschleunigerwalze im Mähdrescher.

Es wurden auch Schrägfördererzusammenbau mit oberschlächtig arbeitenden Förderbändern (DE 1 016 975 A) vorgeschlagen, und unterschlächtig arbeitende Schrägfördererzusammenbau mit einem Gummi-Gewebe-Riemen, der quer angeordnete, von oben her in das Erntegut eingreifende Stahlleisten umfasst ("Silentium Drive" der Fa. Broekema, Veendam, NL, http://www.broekema.nl/DE/de,800548.php).

In den meisten Fällen ist am vorderen Ende des Schrägfördererzusammenbaus ein so genannter Pendelschild angebracht. Dabei handelt es sich um ein rahmenförmiges Element, das einerseits um eine sich horizontal und in Vorwärtsrichtung erstreckende (reelle oder virtuelle) Pendelachse schwenkbar am Gehäuse des eigentlichen Schrägfördererzusammenbaus angelenkt ist und an dem andererseits der Erntevorsatz anbringbar ist, beispielsweise durch obere Haken, die von oben her am Pendelschild anliegen. Der Pendelschild ermöglicht eine Schwenkbewegung des Erntevorsatzes gegenüber dem Schrägfördererzusammenbau um die horizontale Pendelachse, beispielsweise beim Befahren eines Seitenhanges. Der Schwenkbereich muss insbesondere dann relativ groß sein, wenn der Mähdrescher mit höhenverstellbaren vordereren Rädern ausgestattet ist, die den eigentlichen Mähdrescher und den Schrägfördererzusammenbau beim Befahren eines seitlichen Hangs horizontal halten. Hierzu sei auf den Stand der Technik nach DE 100 18 211 A1 und DE 295 19 842 U1 verwiesen.

Als nachteilig ist bei den bekannten Schrägfördern anzusehen, dass sich die Übergabe des Ernteguts vom Erntevorsatz an den Schrägfördererzusammenbau bei größeren Schwenkwinkeln des Erntevorsatzes um die Pendelachse als problematisch erweist, denn dann entsteht ein Winkel zwischen der Abgabeöffnung des Erntevorsatzes und der unteren Schrägfördererwalze, die starr am Gehäuse des Schrägfördererzusammenbaus befestigt ist und die Pendelbewegung des Erntevorsatzes nicht mitmacht. Auf Grund dieses Winkels muss das Erntegut auf der nach unten verschwenkten Seite des Erntevorsatzes über eine Stufe nach oben gefördert werden, was zu Erntegutstaus führen kann.

### Aufgabe

Es ist eine Aufgabe der vorliegenden Erfindung, die erwähnten Nachteile zu vermeiden.

### Lösung

Diese Aufgabe wird durch die Lehre des Anspruchs 1 gelöst, wobei die abhängigen Ansprüche Merkmale vorteilhafter Ausführungsformen wiedergeben.

Ein Schrägfördererzusammenbau für einen Mähdrescher umfasst ein Gehäuse, an dessen rückwärtigem Ende eine obere Schrägfördererwalze drehbar gelagert ist. Am vorderen Ende des Gehäuses ist ein Pendelschild, an dem ein Erntevorsatz abnehmbar angebracht werden kann, um eine vorzugsweise horizontale, sich in Vorwärtsrichtung erstreckende Pendelachse schwenkbar angelenkt. Eine untere Schrägfördererwalze ist am Pendelschild drehbar abgestützt und ein endloses, dehnbares Förderelement mit Mitnehmern läuft um die untere Schrägfördererwalze und um die obere Schrägfördererwalze um.

Auf diese Weise macht die untere Schrägfördererwalze die Bewegung des Pendelschilds (und des Erntevorsatzes) um die Pendelachse mit. Dadurch werden die bisherigen Übergabeprobleme und Erntegutstaus bei verschwenktem Erntevorsatz vermieden, denn die räumliche Relation zwischen dem Erntevorsatz und seiner Abgabeöffnung und der unteren Schrägfördererwalze bleibt auch bei einem um die Pendelachse verschwenktem Erntevorsatz konstant. Die hierfür erforderliche Beweglichkeit zwischen der unteren Schrägfördererwalze und der oberen Schrägfördererwalze, um die beide das endlose Förderelement mit den Mitnehmern umläuft, wird dadurch ermöglicht, dass das Förderelement dehnbar ist. Es kann insbesondere aus einem Gummi-Gewebe-Riemen aufgebaut sein, an dem die Mitnehmer angebracht sind.

### Ausführungsbeispiel

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.
- Fig. 1: ist eine Seitenansicht eines Mähdreschers mit einem pendelnd am vorderen Ende des erfindungsgemäßen Schrägfördererzusammenbaus aufgehängten Erntevorsatz.
- Fig. 2: zeigt eine Draufsicht auf das endlose Förderelement und die Mitnehmer.
- Fig. 3: ist eine schematische Vorderansicht des Pendelschilds mit der daran befestigten unteren Schrägfördererwalze und dem vorderen Bereich des Schrägfördererzusammenbaus.

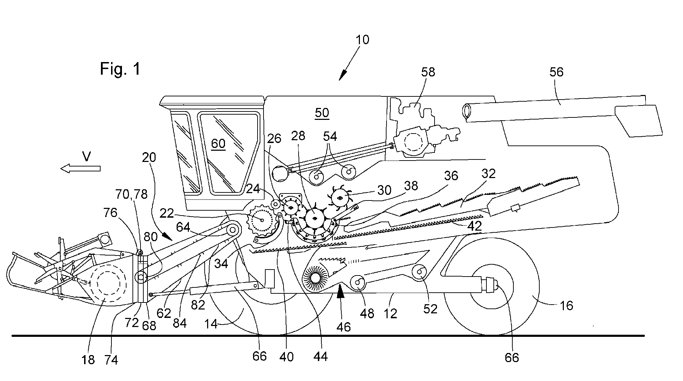

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb, die in der Figur 1 nach links verläuft. Die vorderen Räder 14 könnten auch durch Raupenlaufwerke ersetzt werden. Vorzugsweise sind die vorderen Räder 14 (bzw. die Raupenlaufwerke) gegenüber dem Fahrgestell 12 zum horizontalen Ausrichten des Fahrgestells 12 beim Befahren eines Seitenhangs höhenverstellbar. Die rückwärtigen Räder 16 sind an einer pendelnd gelagerten Achse befestigt, um der Bodenform zu folgen.

An den vorderen Endbereich der Erntemaschine 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet. Anstelle des dargestellten Mehrtrommeldreschwerks könnte eine beliebige andere Dresch- und Trenneinrichtung Verwendung finden, z.B. eine einzige Tangentialdreschtrommel mit nachfolgenden Strohschüttlern oder Trennrotoren oder eine Axialdresch- und Trenneinrichtung mit einem oder zwei Axialdresch- und Trennrotoren.

Das durch den Dreschkorb 34, den Separierkorb und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden. Die genannten Systeme werden mittels eines Verbrennungsmotors 58 angetrieben und von einem Bediener aus einer Fahrerkabine 60 heraus kontrolliert und gesteuert.

Der Schrägfördererzusammenbau 20 umfasst ein Gehäuse 62, das um die sich horizontal und quer zur Vorwärtsrichtung erstreckende Achse einer oberen Schrägfördererwalze 64 schwenkbar am Fahrgestell 12 angelenkt ist. Die Verschwenkung des Schrägfördererzusammenbaus 20 um die Achse der oberen Schrägfördererwalze 64 erfolgt mittels zweier Aktoren 66 in Form von Hydraulikzylindern, die auf beiden Seiten des Schrägfördererzusammenbaus 20 einen Endes am unteren, vorderen Ende des Fahrgestells 12 und anderen Endes rückwärtig des vorderen, unteren Endes des Gehäuses 62 des Schrägfördererzusammenbaus 20 angelenkt sind. Eine Steuerung (nicht gezeigt) steuert den Aktor 66 beim Erntebetrieb derart an, dass der Erntevorsatz 18 in einer gewünschten Höhe oder mit einer gewünschten Auflagekraft über den Boden des abzuerntenden Feldes bewegt wird. Das Gehäuse 62 des Schrägfördererzusammenbaus 20 umfasst in an sich bekannter Weise untere und obere Wände, die durch seitliche Wände untereinander verbunden sind.

Am vorderen Ende des Gehäuses 62 des Schrägfördererzusammenbaus 20 ist ein rechteckiger Rahmen 68 starr angebracht. Dieser Rahmen 68 trägt über einen mittig am oberen, horizontalen Teil des Rahmens 68 angebrachten Schwenkstift 70 ein Pendelschild 72. Der Pendelschild 72 ist um eine durch den Schwenkstift 70 definierte Pendelachse 78, die sich etwa horizontal und in Vorwärtsrichtung V erstreckt, gegenüber dem Rahmen 68 und dem Gehäuse 62 schwenkbar. Am Pendelschild 72 stützt sich ein Befestigungsrahmen 74 des Erntevorsatzes 18 durch Haken 76 ab. Der Erntevorsatz 18 kann demnach vom Pendelschild 72 abgenommen werden, indem der Erntevorsatz 18 über einer geeigneten Ablage (z.B. einem Schneidwerkstransportwagen) positioniert und dann der Schrägfördererzusammenbau 20 mittels der Aktoren 66 abgesenkt wird, wobei sich die Haken 76 dann vom Pendelschild 72 lösen. Die Anbringung erfolgt in umgekehrter Reihenfolge und Richtung. Es wäre auch möglich, weitere Riegel zwischen dem Erntevorsatz 18 und dem Pendelschild 72 vorzusehen, die manuell oder durch Fremdkraft betätigt werden können. Die Verschwenkung des Erntevorsatzes 18 und des Pendelschilds 72 um die Pendelachse 78 kann lediglich durch die Schwerkraft erfolgen, oder es sind fremdkraftbetätigte Aktoren (nicht gezeigt) vorgesehen, die den Schwenkwinkel um die Pendelachse 78 in an sich bekannter Weise selbsttätig basierend auf Signalen von über die Breite des Erntevorsatzes verteilten Sensoren zur Erfassung der Höhe über dem Boden und/oder des Auflagedrucks variieren.

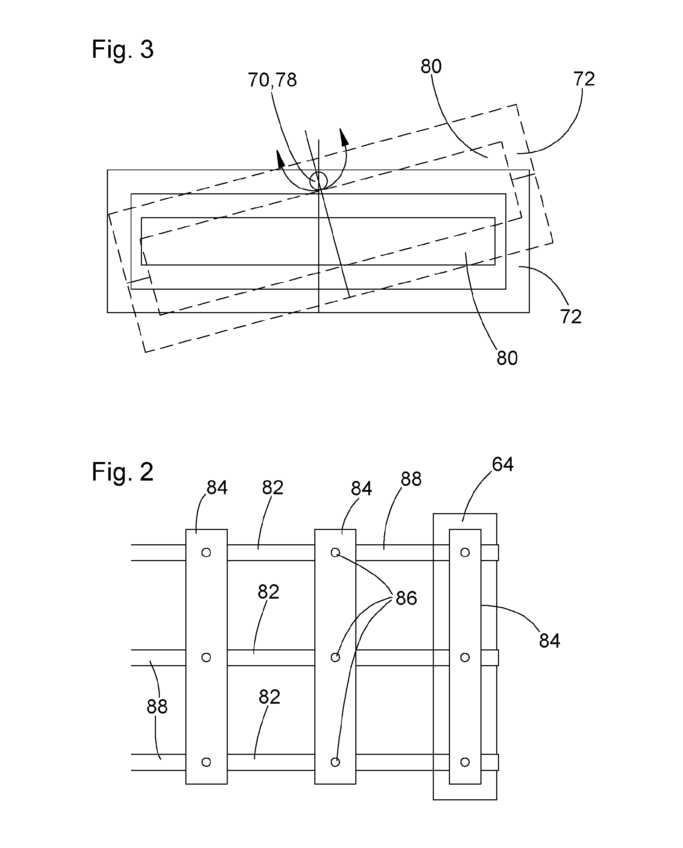

Eine untere Schrägfördererwalze 80 ist drehbar am Pendelschild 72 gelagert. Ihre Drehachse erstreckt sich bei horizontal orientiertem Pendelschild 72 quer zur Vorwärtsrichtung V und horizontal. Um die Schrägfördererwalzen 64, 80 läuft ein endloses Förderelement 82 mit Mitnehmern 84 um, das das Erntegut unterschlächtig fördert. Das Förderelement 82 ist dehnbar und umfasst vorzugsweise mehrere über die Breite des Gehäuses 62 verteilte Gummi-Gewebe-Riemen 88, die untereinander durch die Mitnehmer 84 verbunden sind, wie in der Figur 2 dargestellt. Dabei kann die Anordnung aus Figur 2 verdoppelt werden, d.h. jeweils zwei Mitnehmer 84 mit den zugehörigen Gummi-Gewebe-Riemen 88 im Gehäuse 62 seitlich nebeneinander angeordnet sein. Der Antrieb des Förderelements 82 erfolgt über an seiner Innenseite angebrachte Nocken, die in entsprechende Ausnehmungen in den Schrägfördererwalzen 64 und 80 eingreifen, von denen wenigstens eine vom Verbrennungsmotor 58 her antreibbar ist. Die Mitnehmer 84 sind als U-förmige Stahlleisten ausgeführt, die sich über die Breite des Gehäuses 62 erstrecken, könnten aber auch aus anderem Material bestehen und einen anderen Querschnitt aufweisen. Zur Herstellung einer optimalen Verbindung zwischen den Mitnehmern 84 und dem Förderelement 82 sind Schraubbolzen in die Gummi-Gewebe-Riemen 88 einvulkanisiert. Das Förderelement 82 ist im Betrieb derart gespannt, dass die Mitnehmer 84 bei horizontalem Pendelschild 72 nicht am Boden des Gehäuses 62 entlang kratzen, was den Verschleiß und die Geräuschentwicklung minimiert.

Wie man anhand der Figur 3 erkennt, vollführen der Pendelschild 72 und die untere Schrägfördererwalze 80 die gleiche Schwenkbewegung um die Pendelachse 78. Dadurch wird die Gutübergabe vom Erntevorsatz 18 auf den Schrägfördererzusammenbau 20 auch bei um die Pendelachse 78 verschwenktem Pendelschild 72 optimiert. Die Dehnbarkeit des Förderelements 82 ermöglicht die Verschwenkung der unteren Schrägfördererwalze 80 gegenüber der oberen Schrägfördererwalze 64 um die Pendelachse 78.

Es bleibt noch anzumerken, dass das Förderelement 82 endlos hergestellt sein oder zwei Enden aufweisen kann, die durch geeignete Mittel untereinander verbindbar sind. Die Schrägförderwalzen 64, 80 können mit einem über die Länge konstanten Querschnitt versehen sein, wie in der Figur 2 gezeigt, oder sie umfassen eine Welle mit aufgesetzten Scheiben, auf denen sich das Förderelement 82 abstützt. Weiterhin muss die Pendelachse 78 nicht real sein, sondern kann auch virtuell sein, indem man den Pendelschild 72 durch Rollenlager am Rahmen 68 abstützt, was es ermöglicht, die Pendelachse 78 in die Mitte des Pendelschilds 72 zu legen.

## Patentansprüche

1. Schrägfördererzusammenbau (20) für einen Mähdrescher (10), mit einem Gehäuse (62), an dessen rückwärtigen Ende eine obere Schrägfördererwalze (64) drehbar gelagert ist, einer am vorderen Ende des Gehäuses (62) positionierten, unteren Schrägfördererwalze (80); einem um die untere Schrägfördererwalze (80) und um die obere Schrägfördererwalze (64) umlaufenden, endlosen Förderelement (82) mit Mitnehmern (84) und einem am vorderen Ende des Gehäuses (62) um eine Pendelachse (78) schwenkbar angelenkten Pendelschild (72), an dem ein Erntevorsatz (18) befestigbar ist, **dadurch gekennzeichnet, dass** die untere Schrägfördererwalze (80) am Pendelschild (72) drehbar abgestützt ist und dass das endlose Förderelement (82) dehnbar ist.

2. Schrägfördererzusammenbau (20) nach Anspruch 1, **dadurch gekennzeichnet, dass** das endlose Förderelement (82) einen oder mehrere Gummi-Gewebe-Riemen (88) umfasst, an dem die Mitnehmer (84) angebracht sind.

3. Mähdrescher (10) mit einem Fahrgestell (12), vorderen und hinteren Rädern (14, 16) und/oder Raupenlaufwerken und einem an der Vorderseite des Mähdreschers (10) angebrachten Schrägfördererzusammenbau (20) nach Anspruch 1 oder 2.

4. Mähdrescher (10) nach Anspruch 3, **dadurch gekennzeichnet, dass** die vorderen Räder (14) gegenüber dem Fahrgestell (12) zum horizontalen Ausrichten des Fahrgestells (12) beim Befahren eines Seitenhangs höhenverstellbar sind.
